# EUROPEAN PATENT APPLICATION

(11) **EP 3 789 149 A1**
(43) Date of publication of application: **10.03.2021**
(21) Application number: 20192901.5
(22) Date of filing: 26.08.2020
(51) Int. Cl.: B23K 1/19, B23K 35/02, B23K 35/30, B23K 103/14

(54) **BRAZE FOIL QUANTITY CONTROL METHOD**

(30) Priority: 05.09.2019 US 201916562182
(71) Applicant: Hamilton Sundstrand Corporation, Charlotte, NC 28217-4578 (US)
(72) Inventor: THRESHER, Wayne A., Wilbraham, MA 01095 (US); BENSON, Callie Lynn, Brooklyn, CT 06234 (US)
(74) Representative: Dehns

(57) **Abstract**

A method of making a brazing foil includes flattening the brazing foil (24) to a minimum thickness. Calculating a quantity of material to remove from the brazing foil. Cutting a plurality of perforations (30) into the brazing foil to remove the quantity of material.

## Description

### STATEMENT OF GOVERNMENT INTEREST

This invention was made with government support under D6305-ATPC-28-F2-450X110 awarded by the United States Air Force. The government has certain rights in the invention.

### BACKGROUND

The present disclosure relates to brazing applications, and in particular, brazing applications with thin parent-members.

Brazing is a low-temperature, low-energy method for bonding metals. For some materials, such as titanium and titanium alloys, brazing materials typically come in foil or powder form. The brazing material is placed between two or more parent-members and put in a furnace to be heated. Through capillary action, the brazing material spreads throughout the joint. The brazed assembly maintains the strength of the parent members. However, when brazing thin parent materials, e.g. 0.0508-0.127 millimeters (0.002-0.005 inches), there is a high ratio of brazing alloy to parent material, which results in weakened bonds and distorted products. This problem is exacerbated for some titanium and titanium alloys because some brazing foils are glass-like and can only be manufactured to a minimum thicknesses range of 0.04826-0.07620 millimeters (0.0019-0.0030 inches). Thin parent members can be brazed together using brazing powders; however, titanium brazing powders increase the risk of explosion.

### SUMMARY

In one embodiment of the disclosure, a brazing foil includes a first surface and a second surface opposite the first surface. The brazing foil also includes a plurality of perforations extending through the first surface and through the second surface.

In another embodiment of the disclosure, an assembly includes a first sheet that further includes a first surface that is opposite a second surface. The assembly also includes a second sheet that includes a first surface opposite a second surface. The assembly also includes a brazing foil that further includes a first surface and a second surface. The brazing foil also includes a plurality of perforations extending from the first surface through the second surface of the brazing foil.

In another embodiment, a method of making a brazing foil includes flattening the brazing foil to a minimum thickness. Calculating a quantity of material to remove from the brazing foil. Cutting a plurality of perforations into the brazing foil to remove the quantity of material.

Persons of ordinary skill in the art will recognize that other aspects and embodiments are possible in view of the entirety of the present disclosure, including accompanying figures.

### BRIEF DESCRIPTION OF THE DRAWINGS

FIG. 1 is a perspective view of a brazed assembly.
FIG. 2 is a plan view of a brazing foil including circular perforations.
FIG. 3 is a plan view of a brazing foil including cross-shaped perforations.

While the above-identified drawing figures set forth one or more embodiments, other embodiments are also contemplated. It should be understood that numerous other modifications and embodiments can be devised by those skilled in the art, which fall within the scope and spirit of the principles of the claims. The figures may not be drawn to scale, and applications and embodiments may include features and components not specifically shown in the drawings. Like reference numerals identify similar structural elements.

### DETAILED DESCRIPTION

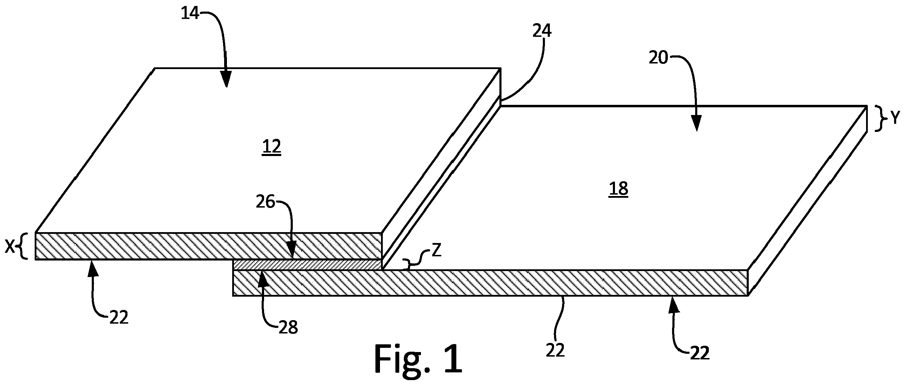

The disclosure relates to a brazing foil with multiple perforations. The perforations allow the quantity of the brazing foil to be altered to provide an appropriate parent-to-brazing-foil ratio. The improved parent-to-brazing-foil preserves the strength and limits erosion of the base material throughout the brazing process. The disclosure also relates to a method for brazing an assembly using the perforated brazing foil. The perforated brazing foil is described below with reference to FIGS. 1-3.

FIG. 1 is a perspective view of assembly 10. As shown in FIG. 1, assembly 10 includes first sheet 12, second sheet 18, and brazing foil 24. First sheet 12 includes first surface 14, second surface 16, and thickness X. Thickness X extends from first surface 14 to second surface 16. Second sheet 18 includes first surface 20, second surface 22, and thickness Y. Thickness Y extends from first surface 20 to second surface 22. Brazing foil 24 includes first surface 26, second surface 28, and thickness Z. Thickness Z extends from first surface 26 to second surface 28.

First sheet 12 can be made of titanium or titanium alloys. In other emobidments, first sheet 12 can be formed from stainless steel, aluminum, nickel-based alloys, or any other metal suitable for brazing. Thickness X can vary from assembly to assembly, depending on the design requirements of the application.

Second sheet 18 can be made of titanium or titanium alloys. In other emobidments, first sheet 12 can be formed from stainless steel, aluminum, nickel-based alloys, or any other metal suitable for brazing. Thickness Y can vary from assembly to assembly, depending on the application.

Brazing foil 24 can be made of titanium or titanium alloys. In other embodiments, brazing foil 24 can be formed from stainless steel, aluminum, nickel-based alloy, or any other metal suitable as brazing foil. Thickness Z can vary from assembly to assembly, depending on the application. Thickness Z of brazing foil 24 is limited by the material properties of brazing foil 24, especially in the case of titanium and titanium alloys. When brazing foil 24 is a titanium alloy, brazing foil 24 is non-ductile and glass-like due to its constituents. Because of the non-ductile and glass-like properties of brazing foil 24, brazing foil 24 cannot currently be manufactured to have a thickness Z less than approximately 0.07620 millimeters (0.0030 inches).

In assembly 10, first sheet 12, second sheet 18, and brazing foil 24 can all be made out of different materials, or can all be made out of the same materials. Thickness X, thickness Y, and thickness Z can all be the same or can vary based on the application. Normally, thickness X and thickness Y will be greater than thickness Z. In the embodiment of FIG. 1, thickness X of first sheet 12 is between 0.0508-0.305 millimeters (0.002-0.012 inches), and thickness Y of second sheet 18 is also between 0.0508-0.305 millimeters (0.002-0.012 inches).Thickness Z of brazing foil 24 is less than 0.07620 millimeters (0.0030 inches).

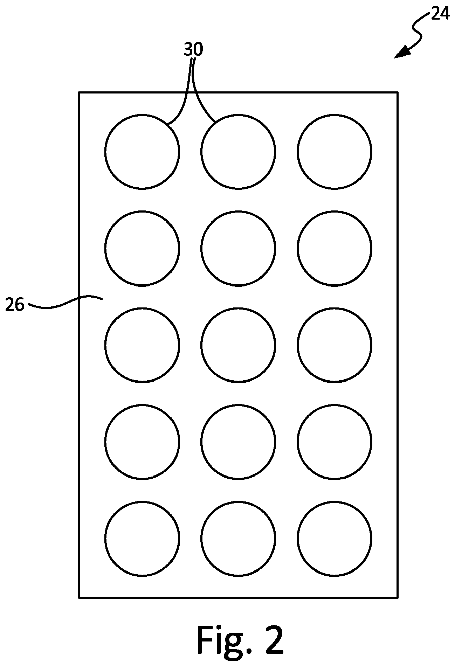

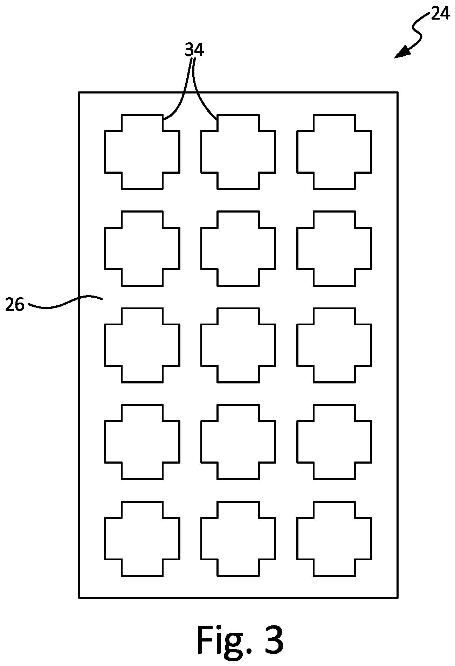

FIG. 2 is a plan view of brazing foil 24. As shown in FIG. 2, brazing foil 24 includes first surface 26 and a plurality of perforations 30. Each of perforations 30 extends from first surface 26 through second surface 28 (as shown in FIG. 1). Perforations 30 decrease the quantity of brazing foil 24 which is significant when the thickness Z of brazing foil 24 cannot be reduced. Perforations 30 also decrease the quantity of brazing foil 24 while maintaining brazing foil 24 as a single sheet and structure that is easy to position and control between first sheet 12 and second sheet 18. Perforations 30 can be tailored to increase the number of perforations or decrease the number of perforations, or increase or decrease the diameter (for round perforations) and open area of the perforations, to obtain the desired strength and/or physical characteristics of assembly 10 based on thickness X, thickness Y, and thickness Z. In the embodiment of FIG. 2, each of perforations 30 is circular. As discussed below with reference to FIG. 3, perforations 30 can include additional geometries and are not limited to circular geometries.

FIG. 3 is a plan view of brazing foil 24. As shown in FIG. 3, brazing foil 24 includes first surface 26 and a plurality of perforations 34. In the embodiment of FIG. 3, perforations 34 are cross-shaped. Each of perforations 34 extends from first surface 26 through second surface 28 (as shown in FIG. 1). Similar to the embodiment of FIG. 2, perforations 34 decrease the quantity of brazing foil 24 while maintaining brazing foil as a single sheet and structure that is easy to position and control between first sheet 12 and second sheet 18. Perforations 34 can be tailored to increase the number of perforations or decrease the number of perforations, or increase or decrease the area of the perforations, to obtain the desired strength and/or physical characteristics of assembly 10 based on thickness X, thickness Y, and thickness Z.

Brazing foil 24 can have any number of different shapes other than the two options laid out here in circular perforations 32 and cross-shaped perforations 36. In addition, brazing foil 24 can have a combination of different shapes to form plurality of perforations 30 or plurality of perforations 34.

In manufacturing assembly 10, brazing foil 24 is flattened to a minimum thickness Z. Then calculations are ran to determine the quantity and size of perforations 30, 34, to remove volume of brazing foil 24, based on the thickness of first sheet 12 and second sheet 18. Next, perforations 30, 34 are formed in brazing foil 24. Perforations 30, 34 can be formed in brazing foil 24 by a roll-punch process, a laser cutting process, a die-cutting process, or any other process capable of cutting perforations 30, 34 into brazing foil 24. After perforations 30, 34 are formed, brazing foil 24 is stacked between first sheet 12 and second sheet 18 so second surface 16 and first surface 26 are contiguous with one another and first surface 20 and second surface 28 are contiguous with one another. Assembly 10 is placed in a furnace, and brazing foil 24 melts and bonds first sheet 12 and second sheet 18. As brazing foil 24 melts, brazing foil 24 fills perforations 30, 34 and reduces thickness Z. Perforations 30,34 reduce the volume of brazing foil 24 as compared to first sheet 12 and second sheet 18. Reducing the volume of brazing foil 24 provides the desired mechanical joining throughout the brazing process, and minimizes the diffusion of the brazing foil 24 into first sheet 12 and second sheet 18. Limiting the diffusion of brazing foil 24 into first sheet 12 and second sheet 18 enables the final assembly to retain most of the structural properties of first sheet 12 and second sheet 18 from before the brazing process. While perforations 30, 34 are shown as circular in FIG. 2 and cross-shaped in FIG. 3, perforations 30, 34 can include different shapes, such as triangles, ovals, rectangles, and stars. Furthermore, brazing foil 24 can include perforations 30, 34 that are all uniform in shape, such as the embodiments of FIGS. 2 and 3, or brazing foil 24 can include perforations with two or more different shapes.

### Discussion of Possible Embodiments

The following are non-exclusive descriptions of possible embodiments of the present invention.

A brazing foil including a first surface and a second surface opposite the first surface. A plurality of perforations extend through the first surface and through the second surface.

The brazing foil of the preceding paragraph can optionally include, additionally and/or alternatively, any one or more of the following features, configurations and/or additional components:
the brazing foil is made of a titanium alloy;
the brazing foil is made of a nickel-based alloy;
the brazing foil has a thickness extending from the first surface to the second surface is less than 0.07620 millimeters (0.0030 inches);
the plurality of perforations are circular;
the plurality of perforations are cross-shaped; and/or
the plurality of perforations includes a first perforation comprising a first shape, and a second perforation includes a second shape, wherein the first shape is different from the second shape.

In another embodiment, an assembly includes a first sheet with a first surface opposite a second surface. The assembly also includes a second sheet with a first surface opposite a second surface. The assembly also includes a brazing foil with a first surface opposite a second surface, and a plurality of perforations extending from the first surface of the brazing foil through the second surface of the brazing foil.

The assembly of the preceding paragraph can optionally include, additionally and/or alternatively, any one or more of the following features, configurations and/or additional components:
the brazing foil is between and contiguous the second surface of the first sheet and the first surface of the second sheet;
the brazing foil has a thickness extending from the first surface of the first sheet to the second surface of the first sheet, wherein the thickness is less than 0.07620 millimeters (0.0030 inches);
the first sheet has a thickness extending from the first surface of the first sheet to the second surface of the first sheet, wherein the thickness is between 0.0508-0.305 millimeters (0.002-0.012 inches).
the second sheet has a thickness extending from the first surface of the second sheet to the second surface of the second sheet, wherein the thickness is between 0.0508-0.305 millimeters (0.002-0.012 inches).;
the brazing foil, the first sheet, and the second sheet are made of at least one titanium alloy; and/or
the brazing foil, the second sheet, and the third sheet are made of at least one nickel-based alloy.
In another embodiment, a method of making a brazing foil includes flattening the brazing foil to a minimum thickness. Calculating a quantity of material to remove from the brazing foil. Cutting a plurality of perforations into the brazing foil to remove the quantity of material.

The method of the preceding paragraph can optionally include, additionally and/or alternatively, any one or more of the following features, configurations and/or additional components:
the brazing foil is made of at least one titanium alloy;
the brazing foil is made of at least one nickel-based alloy;
flattening the brazing foil to a thickness less than 0.07620 millimeters (0.0030 inches).
determining a position of a plurality of perforations on the brazing foil; and/or
the plurality of perforations comprise a plurality of shapes.

While the invention has been described with reference to an exemplary embodiment(s), it will be understood by those skilled in the art that various changes may be made and equivalents may be substituted for elements thereof without departing from the scope of the invention. For example, while FIGS. 2 and 3 show perforations 30, 34 as being evenly distributed on brazing foil 24, in other embodiments, perforations 30, 34 can be unevenly distributed on brazing foil 24 to provide more or less alloy in specific areas of a brazed joint. In addition, many modifications may be made to adapt a particular situation or material to the teachings of the invention without departing from the scope of the invention as defined by the claims.

## Claims

1. A brazing foil comprising:
a first surface (26);
a second surface (28) opposite the first surface;
a plurality of perforations (30) extending through the first surface and through the second surface.

2. The brazing foil of claim 1, wherein the brazing foil (24) is made of a titanium alloy.

3. The brazing foil of claim 1, wherein the brazing foil is made of a nickel-based alloy.

4. The brazing foil of any preceding claim, further comprising a thickness extending from the first surface to the second surface, wherein the thickness is less than 0.07620 millimeters (0.0030 inches).

5. The brazing foil of any preceding claim, wherein the plurality of perforations (30) are circular.

6. The brazing foil of any of claims 1 to 4, wherein the plurality of perforations are cross-shaped.

7. The brazing foil of any of claims 1 to 4, wherein the plurality of perforations comprise a first perforation comprising a first shape, and a second perforation comprising a second shape, wherein the first shape is different from the second shape.

8. A method of making a brazing foil, wherein the method comprises:
flattening the brazing foil (24) to a minimum thickness;
calculating a quantity of material to remove from the brazing foil; and
cutting a plurality of perforations (30) into the brazing foil to remove the quantity of material.

9. The method of claim 8, the brazing foil is made of at least one titanium alloy.

10. The method of claim 8, wherein the brazing foil is made of at least one nickel-based alloy.

11. The method of claim 8, 9 or 10, further comprising:
flattening the brazing foil to a thickness less than 0.07620 millimeters (0.0030 inches).

12. The method of any of claims 8 to 11, further comprising:
determining a position of a plurality of perforations on the brazing foil.

13. The method of claim 12, wherein the plurality of perforations are a plurality of shapes.
